# DEMANDE DE BREVET EUROPEEN

(11) **EP 4 443 681 A1**
(43) Date de publication de la demande: **09.10.2024**
(21) Numéro de dépôt: 23305522.7
(22) Date de dépôt: 07.04.2023
(51) Int. Cl.: H02G 5/06, H02B 1/20

(54) **ENSEMBLE AMELIORE DE DISTRIBUTION D'ENERGIE ELECTRIQUE**

(71) Demandeur: Société de Constructions Mécaniques et Electriques de la Croix d'Argent (COMECA), 75012 Paris (FR)
(72) Inventeur: BENEY, Romain, 71880 CHATENOY-LE-ROYAL (FR); GOSSE, Alain, 02430 GAUCHY (FR)
(74) Mandataire: Cabinet Le Guen Maillet

(57) **Abrégé**

L'invention concerne un ensemble de distribution d'énergie électrique (1) comprenant au moins une barre électriquement conductrice (12) moulée dans un béton de résine (10) chargé de fibres de verre comprenant des renforts intérieurs transversaux (14), l'ensemble de distribution d'énergie électrique (1) étant agencé de sorte que tout ou partie de sa surface extérieure est recouverte d'un maillage de fibres de verre (16). L'invention concerne en outre un procédé de fabrication de l'ensemble de distribution d'énergie électrique (1) et une armoire électrique comprenant un ensemble de distribution d'énergie électrique.

## Description

La présente invention concerne un ensemble de distribution d'énergie électrique. L'invention concerne notamment un ensemble de distribution d'énergie électrique sous la forme d'un panneau de distribution locale d'alimentation électrique à courant élevé comprenant un jeu de barres de distribution d'énergie électrique.

### ÉTAT DE LA TECHNIQUE ANTÉRIEURE

Les équipements industriels nécessitent une distribution en énergie électrique impliquant parfois des courants élevés. La distribution via des jeux de barres, encore appelés parfois « barres omnibus », est fréquente. Les jeux de barres se présentent sous des formes variées. Certains jeux de barres sont moulés dans un béton de résine pour offrir des propriétés électriques et mécaniques ciblées, par exemple en termes d'isolation entre deux barres voisines ou encore en termes de rigidité et de tenue aux secousses sismiques. Un tel moulage se présente sous la forme d'une colonne ou d'un panneau insensible à des perturbations électriques externes et qui supprime tout risque de propagation d'arc.

Une contrainte importante concerne la tenue d'un tel ensemble de distribution d'énergie électrique à des courants de court-circuit d'intensité élevée. En particulier, dans certaines conditions d'exploitation, un jeu de barres moulé doit pouvoir résister à un courant de court-circuit de plusieurs milliers d'ampères pendant une durée prédéterminée, sans risque de dégradation. Il existe notamment un besoin de garantir l'intégrité physique d'un jeu de barres moulé lorsqu'il est traversé par un courant de court-circuit élevé. Un test impose la tenue d'un courant de 100 kA pendant une seconde et la situation actuelle peut être améliorée.

### EXPOSÉ DE L'INVENTION

Un objet de la présente invention est de proposer un ensemble de distribution d'énergie électrique comprenant au moins une barre électriquement conductrice moulée dans un béton de résine, capable de supporter un courant de court-circuit d'une intensité de 100 kA circulant dans ladite barre pendant au moins une seconde, sans subir de dégradation de ladite barre ou du béton de résine subséquente au passage dudit courant de court-circuit.

A cet effet, il est proposé un ensemble de distribution d'énergie électrique comprenant au moins une barre électriquement conductrice moulée dans un béton de résine chargé de fibres de verre, l'ensemble étant agencé de sorte que tout ou partie de sa surface extérieure est recouverte d'un maillage de fibres de verre.

Ainsi, il est avantageusement possible d'obtenir une rigidité structurelle empêchant la formation de fissures dans les conditions précitées de passage d'un courant de court-circuit.

L'ensemble de distribution d'énergie électrique selon l'invention peut comprendre en outre les caractéristiques suivantes, considérés seules ou en combinaison :
- L'ensemble de distribution d'énergie électrique comprend une pluralité de barres conductrices moulées dans un bloc longiforme de béton de résine, chacune des barres conductrices s'étendant à l'extérieur du bloc de béton de résine, à l'une au moins des extrémités du bloc.
- Le béton de résine comprend une résine polymère chargée de fibres de verre, de premier granulat sélectionné à partir d'un premier gabarit, de deuxième granulat sélectionné à partir d'un deuxième gabarit, un premier composé, durcisseur, et un deuxième composé, accélérateur de réaction.
- Le premier granulat est du type HN1/2,5, le deuxième granulat est du type HN 31, le composé durcisseur est le composé Norox ENP-90 ou un équivalent et le composé accélérateur de réaction est le composé Pergaquick CP12 ou un équivalent.
- Le béton de résine comprend 18 à 20% du poids total en résine, 53 à 55% du poids total en premier granulat, 23 à 26% du poids total en deuxième granulat, 1 à 2% du poids de résine en premier composé, durcisseur, et 1 à 4 % du poids de résine en deuxième composé, accélérateur, ce qui permet avantageusement de garantir une tenue de l'ensemble à un courant de court-circuit de 100 kA pendant une seconde au moins, sans dégradation.
- Les barres conductrices de l'ensemble de distribution sont réalisées en cuivre ou en aluminium.
- Les barres conductrices sont agencées dans le béton de résine parallèlement ou sensiblement parallèlement les unes aux autres et des renforts intérieurs transversaux sont agencés dans le béton de résine, perpendiculairement ou sensiblement perpendiculairement aux barres électriquement conductrices, lesdits renfort transversaux traversant lesdites barres électriquement conductrices.
- L'ensemble de distribution d'énergie électrique comprend au moins une alvéole de connexion configurée pour opérer une connexion électrique à une barre électriquement conductrice depuis l'extérieur d'un bloc de béton de résine.

Un autre objet de l'invention est une armoire électrique industrielle comprenant au moins un ensemble de distribution tel que précité, longiforme, et agencé préférentiellement verticalement.

L'invention a également pour objet un procédé de fabrication d'un ensemble de distribution d'énergie électrique comprenant au moins une barre électriquement conductrice moulée dans un béton de résine chargé de fibres de verre, le procédé comprenant une opération de mélange d'une résine polymère, de fibres de verre, de premier granulat sélectionné à partir d'un premier gabarit, de deuxième granulat sélectionné à partir d'un deuxième gabarit, d'un premier composé, durcisseur, et d'un deuxième composé, accélérateur de réaction, pour obtenir un béton de résine.

Selon un mode de réalisation, l'opération de mélange pour obtenir un béton de résine comprend un brassage de 18% à 20% du poids total en résine, 53% à 55% du poids total en premier granulat, 23% à 26% du poids total en deuxième granulat, 1% à 2% du poids de résine en premier composé, durcisseur, et 1% à 4 % du poids de résine en deuxième composé, accélérateur.

Avantageusement, le procédé de fabrication d'un ensemble de distribution d'énergie électrique comprend une opération de moulage d'au moins une barre électriquement conductrice dans le béton de résine, dans une ossature rigide en acier galvanisé ou électrozingué.

Selon un mode de réalisation, le procédé comprend une opération de moulage d'au moins une barre électriquement conductrice dans le dit béton de résine, dans l'ossature rigide, suivie d'une opération de pose d'un maillage de fibres de verre sur une surface du béton de résine moulé obtenu et d'une opération de badigeonnage dudit béton de résine ou de résine liquide sur ledit maillage de fibres de verre.

Selon un mode de réalisation, une opération de séchage est réalisée à une température comprise entre 19°C et 22°C.

Selon un mode de réalisation, la durée de l'opération de séchage est supérieure à 24 heures.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une première coupe schématique d'un ensemble de distribution d'énergie électrique selon un mode de réalisation de l'invention ;
[Fig. 2] est une deuxième coupe schématique d'un ensemble de distribution d'énergie électrique selon un mode de réalisation de l'invention ;
[Fig. 3] est un diagramme illustrant des étapes de fabrication d'un ensemble de distribution d'énergie électrique tel que déjà représenté sur la Fig. 1 et la Fig. 2, selon un mode de réalisation.

### EXPOSÉ DÉTAILLÉ DE MODES DE RÉALISATION

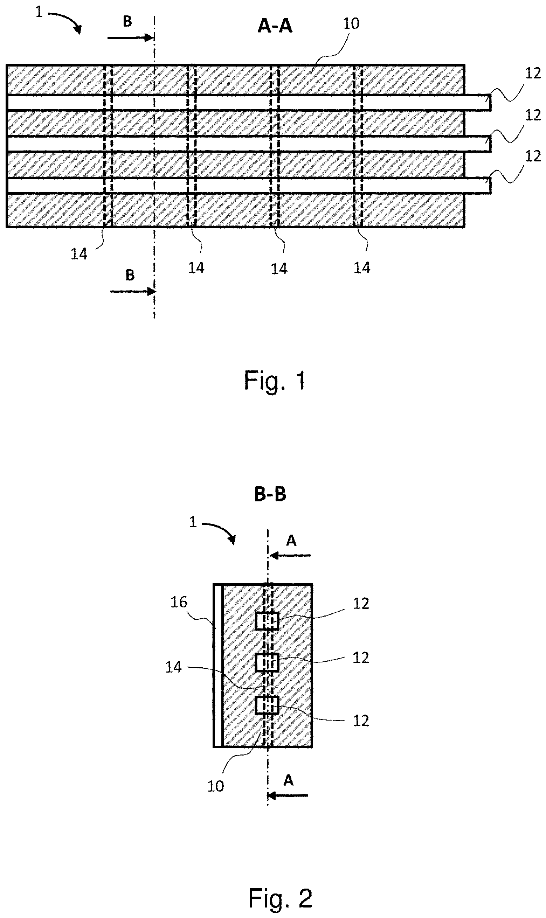

La **Fig. 1** illustre schématiquement en coupe A-A un ensemble de distribution d'énergie électrique 1. Le plan de coupe A-A est représenté sur la Fig. 2. Selon l'exemple de réalisation représenté sur la Fig. 1, l'ensemble de distribution d'énergie électrique 1 comprend trois barres électriquement conductrices 12 moulées dans un bloc de béton de résine 10. Selon un mode de réalisation, les barres électriquement conductrices présentent chacune une épaisseur comprise entre 5 et 10mm. Les trois barres électriquement conductrices 12 sont agencées parallèlement ou sensiblement parallèlement les unes aux autres à intervalles de distance réguliers. Selon un mode de réalisation, le béton de résine 10 dans lequel les barres électriquement conductrices 12 sont moulées est longiforme et présente une forme globale parallélépipédique. Ainsi l'ensemble de distribution d'énergie électrique 1 est agencé sous forme de panneau ou de colonne, ce qui est particulièrement avantageux pour une installation dans une armoire électrique industrielle de distribution d'énergie électrique vers des équipements industriels de puissance et/ou de contrôle. Le bloc de béton de résine 10 comprend des renforts intérieurs transversaux 14 sous la forme de barres de renfort traversant les barres électriquement conductrices. Ces renforts intérieurs sont dits transversaux dans la mesure où ils s'étendent transversalement par rapport à un axe longitudinal du bloc de béton de résine 10. Dans la présente description, les termes « sensiblement parallèlement » décrivent des éléments agencés presque parallèlement les uns par rapport aux autres en présentant un positionnement relatif entre deux éléments selon un angle d'ouverture inférieur à cinq degrés. De la même façon, les termes « sensiblement perpendiculairement » décrivent des éléments agencés presque perpendiculairement les uns par rapport aux autres en présentant un positionnement relatif entre deux éléments selon un angle d'ouverture compris entre quatre-vingt-cinq degrés et quatre-vingt-quinze degrés. Avantageusement, le bloc de béton résine 10 est recouvert d'un maillage de fibres de verre 16 (visible sur la Fig. 2) sur tout ou partie de sa surface extérieure pour en accroître la rigidité. Selon un mode de réalisation, le maillage de fibres de verre présente une densité de 300 grammes par mètre carré de surface. Selon un exemple de réalisation, le maillage est obtenu par découpe d'un matériau tissu WR300 du fournisseur OCV ^{™}. Un tel maillage de fibres de verre est encore appelé tissu de fibres de verre ou « *woven* » (de l'anglais et qui signifie « tissé »). Selon un mode de réalisation, l'une au moins des faces du bloc de béton de résine 10 comprend des alvéoles de connexion à une ou plusieurs barres électriquement conductrices 12 (non représentées sur la Fig.1) aux fins de pouvoir connecter un conducteur électrique depuis l'extérieur de l'ensemble de distribution d'énergie électrique 1, par exemple un conducteur d'alimentation d'un équipement d'une armoire électrique comprenant l'ensemble de distribution d'énergie électrique 1. La connexion d'un conducteur électrique est réalisée via une cassette de connexion configurée pour être insérée dans une alvéole de connexion de l'ensemble de distribution d'énergie électrique 1. Une telle cassette de connexion comprend des plots de connexion présentant la forme d'une pince de connexion configurée pour pincer une barre électriquement conductrice 12 de l'ensemble de distribution d'énergie électrique 1. Ainsi, les alvéoles de connexion utilisées créent chacune une ouverture dans le bloc de béton de résine 10 entre une barre électriquement conductrice 12 et la surface du bloc de béton résine 10 où débouche l'alvéole. Les alvéoles de connexion ne sont pas détaillées ici plus encore dans la mesure où leur description n'est pas utile à une bonne compréhension de l'invention.

La **Fig. 2** est une coupe transversale B-B de l'élément de distribution d'énergie électrique 1. Le plan de coupe B-B est représenté sur la Fig. 1. La Fig. 2 a vocation à illustrer la présence d'un maillage de fibres de verre 16 sur une surface extérieure du bloc de béton de résine 10, en l'occurrence sur l'une des faces que présente le bloc de béton de résine 10. Selon un mode de réalisation, la surface du bloc de béton de résine qui porte un maillage de fibres de verre est une surface opposée à une surface qui comprend les alvéoles de connexion. Les autres éléments représentés sont ceux qui apparaissent déjà sur la Fig. 1. Selon une variante, un maillage de fibres de verre est appliqué sur plusieurs faces du bloc de béton de résine 10, autres que celle ou celles qui portent les alvéoles de connexion électrique. La Fig. 2 illustre en outre que les renforts intérieurs transversaux 14 traversent les barres électriquement conductrices 12.

Selon un mode de réalisation, le béton de résine 10 est obtenu à partir d'une résine polymère chargée de fibres de verre, chargée en outre d'un premier granulat sélectionné à partir d'un premier gabarit et chargée aussi d'un deuxième granulat sélectionné à partir d'un deuxième gabarit. Selon un mode de réalisation, la résine polymère est une résine polyester insaturée iso phtalique, par exemple la résine NORSODYNE ^{™} H44173. Le béton de résine 10 comprend de plus un premier composé de type durcisseur, et un deuxième composé de type accélérateur de réaction. Le premier composé durcisseur (encore appelé catalyseur, catalyseur de polymérisation ou initiateur de réaction) permet d'obtenir un durcissement du mélange de résine polymère (par exemple une résine polyester), de fibres de verre et de granulat, et le deuxième composé, accélérateur de réaction, permet d'accélérer une polymérisation à des températures auxquelles une telle réaction pourrait ne pas se produire dans des conditions idéales. Une sélection de granulat à partir d'un gabarit signifie ici que les grains du granulat présentent une dimension prédéfinie, qui leur confère des avantages particuliers selon le contexte d'utilisation. Selon un mode de réalisation, le premier granulat est du type HN1/2,5 et le deuxième granulat est du type HN 31. En outre et toujours selon ce mode de réalisation, le composé durcisseur est le composé durcisseur Norox ENP-90 ^{™} ou l'un de ses équivalents sous la forme d'un peroxyde de méthyléthylcétone et le composé accélérateur est le composé Pergaquick CP12 ^{™} ou l'un de ses équivalents sous la forme d'une solution octoate de cobalt à 1% de cobalt métallique dilué dans du White Spirit (ou dans un naphta lourd ou dans un distillat de pétrole ou encore dans un succédané d'essence de térébenthine). Un équivalent d'un composé A désigne ici un composé B qui présente les mêmes propriétés chimiques que le composé A.

Avantageusement le béton de résine 10 comprend 18% à 20% du poids total en résine polymère chargée en fibres de verre, 53% à 55% du poids total en premier granulat HN 1/2,5, 23% à 26% du poids total en deuxième granulat HN 31, 1% à 2% du poids en résine de premier composé de type Norox ENP-90 ^{™} ou équivalent, et 1% à 4 % du poids de résine en deuxième composé de type Pergaquick CP12 ^{™} ou équivalent.

En d'autres termes, cela revient à dire que si l'on considère le poids total du mélange du béton de résine 10 obtenu, 18 à 20% de ce poids total provient (est le poids) de la résine polymère chargée de fibres de verre, 53% à 55% de ce poids total provient du premier granulat, 23 à 26% de ce poids total provient du deuxième granulat, et que 1% à 2% du poids de résine est ajouté sous la forme du premier composé, durcisseur, et que 1 à 4% du poids de résine est ajouté sous la forme du deuxième composé, accélérateur. Les dosages du premier composé, durcisseur, et du deuxième composé, accélérateur de réaction, ne sont pas indiqués en pourcentage du poids total, mais en pourcentage de poids du composé résine polymère, dans la mesure où ils s'évaporent au moins partiellement en étant actifs dans le mélange et ne participent donc pas ou peu, *in fine*, au poids total du mélange de béton de résine obtenu.

Il a été mesuré en laboratoire que de telles proportions dans la composition du béton de résine 10 confèrent avantageusement et de façon surprenante à l'ensemble de distribution d'énergie électrique 1 comprenant le béton résine 10 ainsi obtenu, des propriétés exceptionnelles de tenue aux courts-circuits. En particulier, le béton résine 10 ainsi constitué permet à l'ensemble de distribution d'énergie électrique 1 de supporter le passage d'un courant de court-circuit de 100 kA pendant une seconde sans subir de dégradations subséquentes au passage du courant de court-circuit précité, lorsqu'il est utilisé en association avec le maillage de fibres de verre 16 et les renforts intérieurs transversaux 14.

Selon un exemple de réalisation particulier, le béton de résine 10 est obtenu à partir d'un mélange de composants comprenant, pour un volume prédéterminé de mélange :
- 19,92 % du poids total en résine polymère chargée en fibres de verre,
- 53,35 % du poids total en granulat HN 1/2,5,
- 24,25% du poids total en granulat HN 31,
- 1,5 % du poids de résine en durcisseur Norox ENP-90 ^{™} ou équivalent,
- 1,2 % du poids de résine en accélérateur de réaction Pergaquick CP12 ^{™} ou équivalent,
- 2,5 % du poids total en fibres de verre coupé P316.

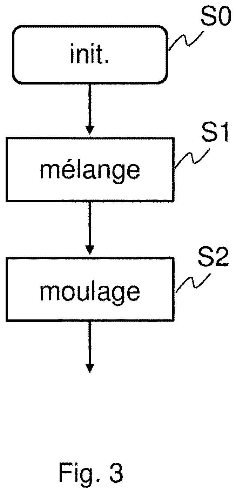

La **Fig. 3** illustre des étapes d'un procédé de fabrication de l'ensemble de distribution d'énergie électrique 1 selon un mode de réalisation. Une étape initiale de préparation **S0** comprend une mise à disposition des composants requis pour la fabrication. Les composants sont alors mélangés par un équipement de type mélangeur (ou mixeur) industriel, ou manuellement, lors d'une étape **S1**. Il est à noter qu'avant toute opération de mélange selon le procédé, la résine polymère se présente en phase liquide ou semi-liquide. Selon un mode de réalisation, les fibres de verres sont du type fibres de non-synthétiques. Selon un exemple de réalisation, les fibres de verre sont des fibres de verre minérales et présentent chacune une longueur maximale de 0.6 cm. Une opération de mélange avec tous les composants est réalisée dans les proportions susmentionnées. Lorsqu'un mélange homogène est obtenu, la ou les barres électriquement conductrices 12 sont positionnées dans une structure en acier formant moule perdu et présentant la forme du bloc de béton de résine 10 à obtenir, de sorte que les extrémités des barres électriquement conductrices 12 s'étendent en dehors du bloc de béton de résine 10, à l'une de ses extrémités au moins, pour pouvoir y opérer des connexions électriques avec une source d'énergie électrique à distribuer ou avec un réseau électrique. Le moule que forme la structure métallique est dit « moule perdu » dans la mesure où il n'est pas réalisé d'opération de démoulage puisque le béton de résine est inséré directement dans l'ossature rigide de l'ensemble de distribution d'énergie électrique 1. Selon un mode de réalisation, l'ossature rigide est formée par soudage de plusieurs éléments pour former une forme globale parallélépipédique préférentiellement longiforme.

Le béton de résine 10 ainsi obtenu par mélange est inséré ou injecté dans l'ossature rigide formant moule perdu lors d'une étape **S2**, après positionnement des alvéoles de connexion débouchant chacune d'une part sur une barre électriquement conductrice 12 et d'autre part à une surface extérieure du bloc de béton de résine 10 à obtenir. Une fois le béton de résine 10 inséré dans l'ossature rigide formant moule, des vibrations mécaniques sont appliquées à l'ossature rigide comprenant le mélange de béton de résine 10 pendant une à deux minutes pour éliminer d'éventuelles bulles formées dans le mélange de béton de résine 10, après quoi le maillage de fibres de verre 16 est apposé sur la surface du béton de résine encore liquide ou semi-liquide et une légère pression est exercée sur la surface du maillage de fibres de verre jusqu'à imprégnation de ce dernier par le béton de résine. Selon un exemple de réalisation, la pression est exercée à l'aide d'un rouleau. Selon un mode de réalisation préféré, toute la surface opposée à celle portant les alvéoles de connexion est couverte du maillage de fibres de verre 16. Ensuite, un badigeonnage du maillage de fibres de verre 16 avec du béton de résine ou de la résine (en combinaison avec le composé durcisseur et le composé accélérateur) est opéré pour appliquer une couche de béton de résine ou de résine d'une épaisseur maximale de deux mm sur le maillage. Selon un mode de réalisation, l'épaisseur de résine appliquée sur la maillage de fibres de verre est préférentiellement d'un millimètre et encore plus préférentiellement de 0,5 millimètre.

Un séchage du bloc de béton de résine 10 est ensuite opéré à une température comprise en 19°C et 22°C pendant au moins 24 heures. Selon un mode de réalisation préféré, les renforts intérieurs transversaux 14 sont également positionnés dans le moule avant insertion ou injection du mélange sous forme liquide pour accroître plus encore la résistance de la structure de l'ensemble de distribution d'énergie électrique 1. Selon un mode de réalisation, les renforts intérieurs transversaux 14 sont réalisés chacun en tube composite traversant l'ossature rigide (châssis) et traversant les barres électriquement conductrices 12 (via des ouvertures traversantes alignées respectivement agencées dans les barres électriquement conductrices), et comprennent chacune une tige filetée vissée à ses extrémités sur l'ossature rigide de l'ensemble de distribution d'énergie électrique, au moyen d'écrous et de rondelles.

L'ensemble de distribution d'énergie électrique 1, lorsqu'il est de forme parallélépipédique, est particulièrement avantageux pour opérer une distribution locale dans une armoire électrique industrielle. Les barres électriquement conductrices 12 constituent elles aussi une ossature rigide, monobloc et autoporteuse particulièrement adaptée à une utilisation verticale offrant une bonne résistance aux courants de court-circuit ainsi qu'une bonne résistance mécanique. Bien évidemment, les modes de réalisation détaillés ci-avant ne sont pas limitatifs et d'autres modes de réalisation peuvent être envisagés. Par exemple, le nombre de barres électriquement conductrices 12 peut être supérieur à trois pour constituer un nombre supérieur de pôles et le nombre d'alvéoles de connexion peut être élevé pour offrir une grande flexibilité en termes de connexion d'équipements électriques. Selon un autre exemple de variante, le bloc de béton de résine 10 utilisé pour l'ensemble de distribution d'énergie électrique 1 peut présenter une forme autre que parallélépipédique. Ces exemples de variantes ne sont pas limitatifs.

## Revendications

1. Ensemble de distribution d'énergie électrique (1) comprenant au moins une barre électriquement conductrice (12) moulée dans un béton de résine (10) chargé de fibres de verre, ledit ensemble étant **caractérisé en ce que** tout ou partie de sa surface extérieure est recouverte d'un maillage de fibres de verre (16).

2. Ensemble de distribution d'énergie électrique (1) selon la revendication précédente comprenant une pluralité de barres électriquement conductrices (12) moulées dans un bloc longiforme dudit béton de résine (10), chacune desdites barres électriquement conductrices (12) s'étendant à l'extérieur dudit bloc dudit béton de résine, à l'une au moins des extrémités dudit bloc.

3. Ensemble de distribution d'énergie électrique (1) selon l'une des revendications 1 et 2, dans lequel le béton de résine (10) comprend une résine polymère chargée de fibres de verre, de premier granulat sélectionné à partir d'un premier gabarit, de deuxième granulat sélectionné à partir d'un deuxième gabarit, un premier composé, durcisseur, et un deuxième composé, accélérateur de réaction.

4. Ensemble de distribution d'énergie électrique (1) selon la revendication 3, dans lequel le premier granulat est du type HN1/2,5, le deuxième granulat est du type HN 31, le composé durcisseur est le composé Norox ENP-90 ou un équivalent et le composé accélérateur de réaction est le composé Pergaquick CP12 ou un équivalent.

5. Ensemble de distribution d'énergie électrique (1) selon la revendication 4, dans lequel ledit béton de résine comprend 18% à 20% du poids total en résine polymère, 53% à 55% du poids total en premier granulat, 23% à 26% du poids total en deuxième granulat, 1% à 2% du poids de résine en premier composé et 1% à 4 % du poids de résine en deuxième composé.

6. Ensemble de distribution d'énergie électrique (1) selon l'une des revendications 1 à 5, dans lequel la ou les barres électriquement conductrices (12) sont réalisées en cuivre ou en aluminium.

7. Ensemble de distribution d'énergie électrique selon l'une des revendications 1 à 6, dans lequel les barres électriquement conductrices (12) sont agencées dans le béton de résine (10) parallèlement ou sensiblement parallèlement les unes aux autres et dans lequel des renforts intérieurs transversaux (14) sont agencés dans le béton de résine (10), perpendiculairement ou sensiblement perpendiculairement aux barres conductrices (12), lesdits renforts intérieurs transversaux (14) traversant lesdites barres électriquement conductrices (12).

8. Ensemble de distribution d'énergie électrique (1) selon l'une quelconque des revendications 1 à 7, comprenant au moins une alvéole de connexion configurée pour opérer une connexion électrique à une barre électriquement conductrice (12) depuis l'extérieur d'un moulage de béton de résine.

9. Armoire électrique (4) comprenant au moins un ensemble de distribution selon l'une des revendications précédentes, longiforme, agencé verticalement.

10. Procédé de fabrication d'un ensemble de distribution d'énergie électrique comprenant au moins une barre électriquement conductrice (12) moulée dans un béton de résine chargé de fibres de verre, le procédé étant **caractérisé en ce qu'**il comprend une opération de mélange d'une résine polymère, de fibres de verre, de premier granulat sélectionné à partir d'un premier gabarit, de deuxième granulat sélectionné à partir d'un deuxième gabarit, d'un premier composé, durcisseur, et d'un deuxième composé, initiateur de réaction pour obtenir un béton de résine.

11. Procédé de fabrication d'un ensemble de distribution d'énergie électrique selon la revendication 9, dans lequel ladite opération de mélange pour obtenir un béton de résine comprend un brassage de 18% à 20% du poids total en résine, 53% à 55% du poids total en premier granulat, 23% à 26% du poids total en deuxième granulat, 1% à 2% du poids de résine en premier composé, durcisseur, et 1% à 4 % du poids de résine en deuxième composé, accélérateur.

12. Procédé de fabrication d'un ensemble de distribution d'énergie électrique selon la revendication 11, le procédé comprenant une opération de moulage d'au moins une barre électriquement conductrice (12) dans ledit béton de résine, dans une ossature rigide en acier galvanisé ou électrozingué.

13. Procédé de fabrication d'un ensemble de distribution d'énergie électrique selon la revendication 11, le procédé comprenant une opération de moulage d'au moins une barre électriquement conductrice (12) dans le dit béton de résine, dans ladite ossature rigide, suivie d'une opération de pose d'un maillage de fibres de verre sur une surface dudit béton de résine et d'une opération de badigeonnage de résine liquide sur ledit maillage de fibres de verre.

14. Procédé selon la revendication 13, dans lequel une dite opération de séchage est réalisée à une température comprise entre 19°C et 22°C.

15. Procédé selon l'une des revendications 13 à 14, dans lequel ladite opération de séchage a une durée supérieure à 24 heures.
